# EUROPEAN PATENT SPECIFICATION

(11) **EP 4 311 727 B1**
(45) Date of publication and mention of the grant of the patent: **26.02.2025**
(21) Application number: 23187850.5
(22) Date of filing: 26.07.2023
(51) Int. Cl.: B60R 15/02, B60R 11/00

(54) **CONTAINER DEVICE FOR VEHICLES**
BEHÄLTERVORRICHTUNG FÜR FAHRZEUGE
DISPOSITIF CONTENEUR POUR VEHICULES

(30) Priority: 26.07.2022 IT 202200015735
(43) Date of publication of application: 31.01.2024
(73) Proprietor: Co.Par. S.r.l., 35014 Fontaniva (PD) (IT)
(72) Inventor: LAGO, Federico, 35014 Fontaniva (Pd) (IT)
(74) Representative: Braidotti, Andrea

(56) References cited:
- EP-A1- 2 093 133
- US-A- 1 489 948
- US-A- 4 805 660

## Description

### BACKGROUND OF THE INVENTION

The present invention relates to a container device for vehicles according to the preamble of independent claim number 1.

In general, the container device for vehicles according to the present invention is intended to be mechanically connected to the structure of a vehicle, for example a motor vehicle, in particular a lorry (ie a truck) and/or a road train and/or trailers and/or semi-trailers and/or articulated vehicles and/or similar.

In particular, the container device for vehicles can be used in the sector of production and marketing of accessories and equipment for vehicles, such as for example boxes, little boxes and compartments of various kinds for containing and/or storing tools, for example protective gloves or mechanical tools (eg spanners, pliers or the like), or straps for locking loads and any other tool or device useful to an operator in daily work operations.

Furthermore, the container device object of the present invention can also be advantageously used as a seat for housing tanks and/or cans for containing fluids and/or gels, for example handwashes.

Therefore, the invention relates the sector of production and marketing of vehicle accessories and equipment or it can find advantageous use in the sector of production and marketing of vehicles, in particular commercial vehicles and/or agricultural vehicles and/or trailers (eg agricultural trailers), for example for the transport of goods.

### STATE OF THE ART

As anticipated above, the device in question can be advantageously used in various types of vehicles. In the following, particular reference will be made to the installation of the aforesaid device on a vehicle, known by the generic term of "truck", without however excluding the possible application in any other type of vehicle, in particular of a commercial type, such as, for example, those above mentioned.

The term "container device" shall be understood, within the meaning of this patent, as an element intended to be mechanically linked to a vehicle, for example to the structure or chassis of a truck, and/or to the trailer of a vehicle and in particular mounted outside an operator's cockpit.

In the vehicle sector, in particular in the commercial vehicle sector (eg motor vehicles), it is known to use container devices comprising multiple internal compartments, for example for the storage of objects of various kinds and/or tanks, in particularly containing water, for washing the hands of an operator.

Traditionally, currently commercially available container devices normally comprise a body, for example metallic (eg in stainless steel), which internally defines at least one housing space.

In particular, the body has a substantially parallelepiped shape and, in more detail, it is substantially in the shape of a case and/or box. In fact, these devices are commonly referred to in the technical jargon of the sector with the term "boxes" and/or toolboxes. The container device of the known type also comprises at least one closing lid, rotatably constrained to one of the edges of the body and movable between a closed configuration in which said lid completely covers the access opening to the housing space of the container, and an open configuration wherein the lid clears said access opening.

In more detail, the internal housing volume of said container device can be configured to house at least one tank and/or one barrell. Said tank and/or barrell is housed within said housing volume and mechanically constrained to the body of the container device by means of dedicated and further removable connection means, such as in particular bands, belts, cables and/or the like. These connection means are indispensable for locking the tank in position and preventing it from moving inside the box during vehicle movements.

It is furthermore necessary that said connecting means be accessible from the access opening of the container device to allow the operator to release the tank in order to be able to fill and/or wash it. This provision implies that the operator must operate these connection means each time it becomes necessary to fill and/or wash the tank.

Furthermore, the tank can comprise at least one fluid connection element, for example a portion of pipe, placed for fluid connection between an opening made on said tank and a dispenser, for example a tap provided mounted on the lid. Normally, the opening is obtained on the lower part of the tank, close to the tap with the lid in the closed configuration, ie substantially at the same height.

In more detail, the dispenser is mechanically mounted on the outer side of the face of the closure lid and is configured to regulate the flow of fluid passing through it, for example water and/or a gel.

The housing volume not occupied by the tank is intended to house objects and/or tools of various kinds, for example ropes, cords and chains useful to an operator in his daily work.

The container devices for vehicles of the known type briefly described up to now have proved to be not free from drawbacks in practice.

The main drawback lies in the fact that container devices of the known type are impractical to use by the operator since filling or washing the tank is long and laborious. In more detail, the tanks contained within container devices of the known type are mechanically linked to the corresponding body, which delimits the internal housing volume, of said container devices. This provision results in the fact that their disassembly, for example for maintenance or filling operations, is long and laborious, as anticipated above. For example, the operator may find himself having to unscrew screws or similar connection means in order to extract and then fill the tank, with a considerable loss of time for the operator himself.

A further drawback consists in that containers of the known type are expensive and complex to produce because they require a large number of components.

A further drawback consists in that it is necessary for the operator to constrain the tank or canister within the housing volume in a firm and secure manner with the connection means in order to avoid any undesirable movements which may cause breakage of the tank or canister or in any case spills of fluid within the body.

A further drawback consists in that the provision of the aforesaid fluid connection element between the tank and the cock implies possible breakages and/or malfunctions which could lead to the loss of liquid or the inability to dispense liquid through the cock located on the lid.

A further drawback consists in that said containers of known type are subject to infiltrations, for example water can penetrate from the outside and stagnate inside the housing volume.

EP2093133, that discloses a container device according to the preamble of claim 1, specifically relates to a driver's cab of a commercial vehicle which is provided with a storage compartment positioned, at least partially above the mudguard in the rear area of one side of the driver's cab. In particular, the storage compartment is integrated/ defined within the driver's cab itself and is provided with an opening to be able to access its interior even from inside the driver's cab itself. A water tank can be removably hooked and fixed inside the storage compartment and, in this regard, the hooking and fixing means of the tank are obtained exclusively inside the seat which is intended to house the tank itself.

### OBJECTS OF THE INVENTION

The object of the present invention is to propose a container device for vehicles which makes it possible to obviate and remedy, at least in part, the drawbacks present in the known solutions mentioned above.

A further object of the present invention is to propose a container device for vehicles provided with at least one tank, which can be removed for its filling or maintenance in a quick and simple manner.

A further object of the present invention is to propose a container device for vehicles which is constructively simple.

A further object of the present invention is to propose a container device for vehicles provided with at least one tank which minimizes any hydraulic losses.

A further object of the present invention is to propose a container device for vehicles which is easy and simple to use, in particular for filling and/or maintaining at least one tank.

A further object of the present invention is to propose a container device for vehicles which is mechanically resistant.

A further object of the present invention is to propose a container device for vehicles which is compact and/or not bulky.

A further object of the present invention is to propose a container device for vehicles which can be manufactured simply, quickly and with low costs.

A further object of the present invention is to propose a container device for vehicles which can be installed on vehicles simply, rapidly and at low costs.

A further object of the present invention is to propose a container device for vehicles which is structurally and functionally completely reliable and safe.

Another object of the present invention is to propose a container device for vehicles which has an alternative and/or improved configuration, both in terms of construction and in functional terms, with respect to traditional known solutions.

### SUMMARY OF THE INVENTION

All the aims, both individually and in any combination thereof, and others which will appear from the following detailed description are achieved, according to the invention, by a container device for vehicles having the feature indicated in claim 1. In particular, the aims are achieved by means of a container device 1 configured to be mechanically mounted on a vehicle, in particular outside a passenger compartment of said vehicle, comprising at least one containment body 2 defining internally at least one housing volume 3 and provided with at least an access opening 7 which places said volume 3 in communication with an external environment, at least one separator element 4 arranged inside said housing volume 3 and configured to separate said housing volume 3 in at least one first compartment 5 and at least a second compartment 6, at least one closure lid 8 mechanically connected to said at least one containment body 2 and movable between a closed configuration in which said at least one lid 8 at least partially obstructs said access opening 7 and an open configuration in which it frees said access opening 7, at least one tank 9 provided with a front face 9' and configured to be housed inside said second compartment 6 and also configured to contain at least one liquid and/or gel and, in which said tank 9 is slidably inserted in a removable manner inside said second compartment 6, and in which said at least one lid 8, in said closed configuration, defines a mechanical stop in correspondence with said second compartment 6 to block said tank 9 inside said second compartment 6 with said front face 9' placed in abutment against said lid 8 .

Advantageously, said tank 9 has a size substantially equal to the volume defined by said second compartment 6, so as to be fitted to measure in said second compartment 6. Advantageously, said lid 8 comprises a first portion 11, which at least partially or completely obstructs said access opening 7 in correspondence with said first compartment 5 with said lid 8 in the closed configuration, and said lid 8 also comprises a second portion 12, the which at least partially obstructs said access opening 7 in correspondence with said second compartment 6 with said lid 8 in the closed configuration, to define said mechanical stop and block said tank 9 inside said second compartment 6.

Advantageously, said separator element 4 divides said access opening 7 into a first opening 7' for said first compartment 5 and a second opening 7" for said second compartment 6, said second portion 12, with said lid 8 in said closed configuration, it only partially obstructs said second opening 7" so as to allow access to said tank 9. Advantageously, the lid 8 is configured so that, in its closed configuration, the lid itself only partially obstructs the second opening 7" access to the second compartment 6 in which the tank 9 is housed, therefore at least a part of the tank itself - and in particular the tap 13 of the tank - is thus accessible from the outside even when the lid 8 is in the closed configuration.

Advantageously, said tank 9 comprises at least one tap 13, which is directly accessible from the outside with said lid 8 in said closed configuration.

Advantageously, said second opening 7" of said second compartment 6 defines a plane P and by the fact that said tank 9 is provided with a front face 9' extending at least partially along said plane P and placed in abutment against said second portion 12 of said lid 8 in said closed configuration.

Advantageously, said at least one tap 13 protrudes from said front face 9' of said tank 9 for a linear distance less than or equal to a maximum thickness of said second portion 12 of said lid 8.

Advantageously, said separator element 4 is made in one piece with said body 2. Advantageously, said body 2 is made by molding of plastic material.

Advantageously, said tank 9 is mechanically coupled to said body 2 exclusively by shape coupling.

Conveniently, between the external walls of said tank 9 and the internal walls of the second compartment 6 there is no mechanical engagement of shape and, in particular, there is no shaped profile which slides into a corresponding counter-shaped profile. Advantageously, this allows to facilitate the production of the device.

Conveniently, in a possible embodiment, again in addition to the mechanical abutment that the lid 8 defines for the tank 6 inserted in the second compartment, said tank 9 comprises abutment means which cooperate, in the extraction direction of the tank 9 from the second compartment 6, with feedback means obtained inside the second compartment.

### BRIEF DESCRIPTION OF THE DRAWINGS

The present invention is hereinafter further clarified in some of its preferred embodiments, given for purely exemplifying and non-limiting purposes, with reference to the attached tables of drawings, in which:
- figure 1 shows a perspective view of a container device for vehicles according to a preferred embodiment thereof, with a lid in a closed configuration;
- figure 2 shows a front view of the device illustrated in Figure 1;
- figure 3 shows a side view of the device illustrated in Figure 1;
- figure 4 shows a perspective view of the container device with the lid in an open configuration;

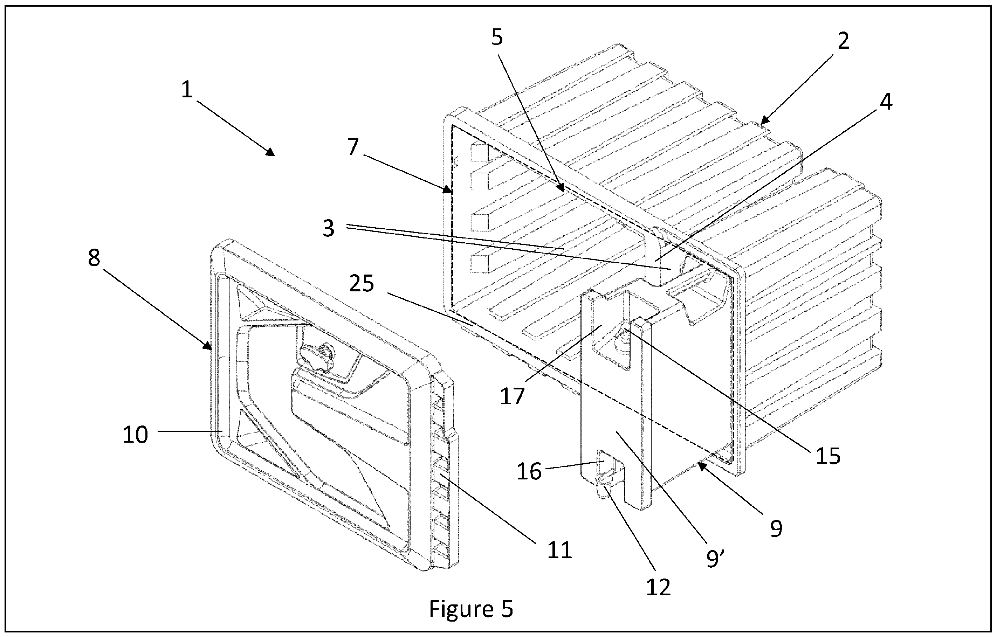

- figure 5 shows an exploded perspective view of the device illustrated in Figure 1 with the tank partially extracted from the second compartment,
- figure 6 shows a side view of a possible variant of the tank of the container device;
- figure 7 is a perspective view of an enlarged detail of figure 6,
- figure 8 shows a perspective view of a detail of the device according to the invention, in a possible variant thereof, which is sectioned in correspondence with a region in which abutment means obtained on the external surface of the tank, as illustrated in the detail of fig. 7, cooperate with abutment means formed on the inner surface of the second compartment.

### DETAILED DESCRIPTION OF THE INVENTION

With reference to the accompanying drawings, the reference numeral 1 indicates as a whole a container device, in particular for vehicles, according to the present invention.

The device 1 is of the type configured and intended to be removably mounted and installed on a commercial vehicle for the transport of goods. Conveniently, the device 1 is of the type configured and intended to be removably mounted on the trailer of a motor vehicle, truck or other commercial vehicle for the transport of goods.

The device 1 is of the type which, once mounted and installed on a commercial vehicle for the transport of goods, the interior of the device is accessible exclusively and only from the outside of said vehicle and, in particular, from outside the passenger compartment of said vehicle.

Preferably, the device in question is intended to be mechanically connected to the structure of a vehicle, in particular a commercial vehicle for the transport of goods, such as for example motor vehicles (eg trucks) and/or the like. Obviously, the device in question can be applied to any type of vehicle without thereby departing from the scope of protection of the present patent.

The term "container device" shall mean, within the meaning of this description, a device intended to contain various types of objects inside it, for example tools and/or work tools and tanks (eg tanks) for washing, for example, the hands of an operator.

In the following, particular but non-limiting reference will be made to the application of the element according to the invention to a motor vehicle (ie a truck).

The container device 1 for vehicles, object of the present invention, is configured to be mechanically mounted on a vehicle, in particular outside a passenger compartment of said vehicle, and comprises at least one containment body 2.

Preferably, the body 2 is substantially box-shaped with a bottom wall 21 and with an access opening 7 which is opposite and facing said bottom wall.

Preferably, the substantially box-shaped body 2 can be slightly flared towards the bottom wall 21. Conveniently, the access opening 7 is the only opening of the body 2 which allows access inside its volume 3 and, in particular, the body 2 (in correspondence with the bottom part 21 and with the lateral wall 22) has no other through openings or for accessing its internal volume 3.

Preferably, the body 2 comprises at least one bottom wall 21, in particular having a mainly substantially planar development. In particular, said bottom wall 21 has a substantially rectangular shape.

The body 2 also preferably comprises at least one side wall 22 which extends overhanging from a perimetric edge of the bottom wall 21.

In accordance with the preferred embodiment illustrated in the attached figures, the side wall 22 has a substantially rectangular or trapezoidal shape (with the smaller base facing the back wall 21). Obviously, the side wall 22 as well as the bottom wall 21 may have any shape and/or size without thereby departing from the scope of protection of the present patent.

Conveniently, in accordance with the preferred embodiment, the perimetric edge of the bottom wall 21 comprises a first portion and a second portion, substantially parallel to each other. Furthermore, the perimetric edge of the bottom wall 21 comprises a third section and a fourth section, parallel to each other and perpendicular to the first and second sections of the perimetric edge, in particular placed at the end connection of the first section and the second section. Preferably, the first and second sections have a greater extension than the third and fourth sections of the perimetric edge of the bottom wall 21, to form the aforementioned substantially rectangular shape.

Advantageously, the side wall 22 extends starting from the bottom wall 21 parallel to an axis X, orthogonal to the bottom wall 21 itself.

In more detail, starting from each section of the perimeter edge of the bottom wall 21, a corresponding portion of the side wall 22 extends, in particular parallel two by two, so as to create a structure substantially similar to a parallelepiped (i.e. a shape substantially similar to a box and/or a crate and/or a cassette).

In other words, the portions of the side wall are connected to each other by suitable radii or connecting joints. In this way, the body 2 defines a shape substantially of an internally hollow parallelepiped, i.e. with a face which allows free access inside said body 2.

Advantageously, said body 2 is made by molding of plastic material.

Preferably, said body 2 is made by hot moulding, in particular by thermoforming and/or blowing and/or rotational molding and/or injection moulding. In this way, a body 2 is obtained which is mechanically resistant, in particular rigid, and at the same time light, free from welding and resistant to impact.

Preferably, the containment body 2 is made for example of polyethylene and/or polypropylene and/or polyamide (eg Nylon) and/or any other polymeric material suitable for being subjected, for example, to a molding process.

Preferably, ribs 23 are formed on the bottom wall 21 and on the side wall 22, in particular arranged side by side, for example at regular distances and such as to cover, at least partially, the outer surface of the body 2. Preferably, the ribs 23 have flared development towards the back wall 21.

In this way, the ribs 23 make it possible to create a rigid and mechanically resistant structure, capable of withstanding shocks (eg during transport) and of resisting corrosion and degradation deriving from exposure to atmospheric agents.

The body 2 internally defines at least one housing volume 3 and is provided with at least one access opening 7 which places said volume 3 in communication with an external environment.

Preferably, said access opening 7 has a substantially planar development and is substantially parallel, opposite and facing the back wall 21. Preferably, the housing volume 3 remains defined between the back wall 21 and the side wall 22.

Preferably, the containment device 1 further comprises at least one separator element 4. Preferably said separator element 4 is arranged within said housing volume 3 and is configured to separate said housing volume 3 into at least one first compartment 5 and at least one second compartment 6.

Preferably, said separator element 4 is mechanically connected to the body 2 and extends substantially between said bottom wall 21 and said access opening 7.

Advantageously, said separator element 4 is made in one piece with said body 2.

In other words, said separator element 4 is preferably integral with the body 2, so as to make the first compartment 5 and the second compartment 6 a single body.

In accordance with the preferred embodiment illustrated in the attached figures, the separator element 4 defines an intermediate wall which extends parallel to the side wall 22 and in particular parallel to the X axis. Preferably, the separator element 4 extends from the rear wall 21 towards the access opening 7.

Preferably, said separator element 4 is connected to the body 2 by means of suitable connecting spokes. These connecting radii allow correct molding of the plastic material, and preferably contribute to giving the body 2 mechanical strength, said body 2 being free from sharp edges.

Preferably, said separator element 4 is positioned in such a way as to form a housing seat, in particular the second compartment 6 to measure, for at least one tank and/or one tank (described in detail below).

Preferably, said separator element 4 is arranged in a position inside the housing volume 3 such as to give the first compartment 5 a larger volume than that defined by the second compartment 6.

The containment device 1 further comprises at least one closing lid 8 mechanically connected - preferably articulated - to said at least one containment body 2 and movable between a closed configuration in which said at least one lid 8 at least partially obstructs said access opening 7 and a open configuration in which it frees - preferably completely - said access opening 7.

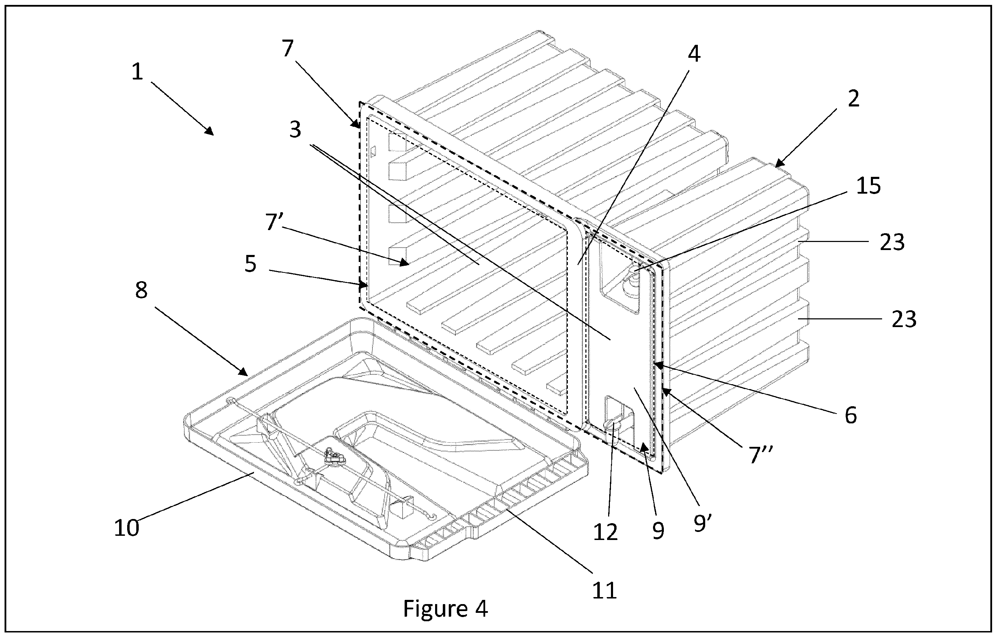

Preferably, the closing lid 8 is mechanically connected to one side of the body 2 (cf. Figure 4). In more detail, the lid 8 is mechanically constrained, for example by means of a rotatable connection, in particular by at least one hinge 81, to a front edge 25 of the body 2, at least partially defining/delimiting the access opening 7.

The containment device 1 also comprises at least one tank 9 configured to be housed inside said second compartment 6 and to contain at least one liquid and/or a gel. The device 1 is provided with a front face 9'. Preferably, when the tank is inserted/housed in the second compartment 6, the front face 9' of the tank 9 faces the access opening 7.

In more detail, said tank 9 can be slidably inserted in a removable manner inside said second compartment 6.

Advantageously, in a possible embodiment, said tank 9 has a size substantially equal to the volume defined by said second compartment 6, so as to be fitted to measure in said second compartment 6.

Preferably, the second compartment 6 can define a volume substantially equal to the external dimensions of the tank 9; in this way, connection elements external to the tank 9 and/or auxiliary elements, for example belts and/or the like, are not necessary to block the tank 9 itself in position.

The term "substantially equal" must be understood as such as to allow the sliding of the tank 9 to measure inside the second compartment 6.

Preferably, the tank 9 is inserted to measure inside the second compartment 6 without there being a mechanical engagement of shape between the external walls of said tank 9 and the internal walls of the second compartment 6 and, in particular, there is no is any shaped profile which is inserted by sliding within a corresponding counter-shaped profile.

Preferably, the tank 9 has a bottom base, which is opposite and facing the front face 9', which comes into contact with the inner surface of the bottom wall 21 of the second compartment 6 of the body 2.

Preferably, the second compartment 6 of the body 2 has a substantially flared shape towards the corresponding bottom wall 21**.** Correspondingly, the tank 9 has a flared development from its front face 9' towards its opposite/facing bottom base which is intended to come into contact with or in any case come close to the inner surface of the bottom wall 21 of the second compartment 6 of the body 2. Conveniently, the tank 9 has a substantially truncated pyramid shape with the front face 9' having a greater surface extension than to the opposite bottom base.

Preferably, the second compartment 6 - and correspondingly the tank 9 which is housed in said second compartment 6 - has a development that entirely affects one of the two sides (more preferably the shorter side) which delimit the access mouth 7.

Furthermore, said at least one lid 8, in said closed configuration, defines a mechanical abutment in correspondence with said second compartment 6 to block said tank 9 inside said second compartment 6 with said front face 9' placed in abutment against said lid 8.

Preferably, said lid 8 is made of a polymeric material, for example polyethylene and/or polypropylene and/or the like, in particular by means of a molding process, for example hot pressing.

In more detail, said lid 8 preferably comprises a first portion 10. The first portion 10 at least partially obstructs said access opening 7, in particular in correspondence with said first compartment 5 with said lid 8 in the closed configuration. Preferably, the first portion 10 of the lid 8 is configured so as to completely obstruct/close (when the lid is in the closed configuration) the opening part 7 for accessing said first compartment 5.

Furthermore, said lid 8 preferably comprises a second portion 11.

Advantageously, the second portion 11 partially obstructs said access opening 7 in correspondence with said second compartment 6 with said lid 8 in the closed configuration. In this way, the second portion 11 defines said mechanical stop and thus locks/retains the tank 9 inside the second compartment 6.

In this way, there is no need to provide any mechanical connection system between said closing lid 8 and said mechanical stop and an operator can easily access the tank 9 without having to first open said lid 8.

In more detail, said separator element 4 divides said access opening 7 into a first opening 7' for said first compartment 5 and a second opening 7" for said second compartment 6 .

Preferably, the first opening 7' and the second opening 7" are side by side, in particular separated by a front edge of the separator element 4 and, in particular, together they define the access opening 7.

Preferably, said lid 8, in its closed configuration, completely covers the first opening 7' and only partially covers the second opening 7". Advantageously, the first portion 10 of the lid 8 covers, and preferably seals, the first opening 7' to completely close the access to the first compartment 5.

Advantageously, said second portion 11, with said lid 8 in said closed configuration, obstructs said second opening 7" only partially so as to allow access to said tank 9, and in particular to a portion of its front face 9', even when the lid 8 is in the closed configuration.

In other words, the second portion 11 of the cover 8 has a smaller planar extension than the extension of the second opening 7". In this way, with the lid 8 in the closed configuration, the second portion 11 abuts a corresponding portion of the front face 9' of the tank 9 allowing at the same time direct access to the remaining portion of the front face 9' of the tank 9.

In accordance with the possible preferential embodiment illustrated in the attached figures, the second portion 11 of the lid 8 extends overhanging from a lateral edge of the lid 8 itself.

Advantageously, the second opening 7" of said second compartment 6 defines a plane P. Furthermore, said tank 9 is provided with the aforementioned front face 9', which extends at least partially along said plane P and is placed in abutment against said second portion 11 of said lid 8 in said closed configuration.

Conveniently, the second portion 11 of the lid 8 extends (with the lid 8 in the closed configuration) parallel to the plane P starting from the aforementioned lateral edge of the lid 8 itself. In more detail, the second portion 11 extends starting from the lateral edge of the first portion 10 of the lid 8, the lateral edge which is configured to abut with the separator element 4 (or at least to reach this) when the cover 8 is in closed configuration.

Conveniently, the second portion 11 of the lid 8 can assume any shape suitable for defining the mechanical abutment for the tank 9 and at the same time advantageously allowing direct access to the tank 9 itself when the lid is in the closed configuration.

For example, in accordance with the embodiment illustrated in the attached figures, the second portion 11 of the lid 8 has a substantially lamellar or tab shape which protrudes from the aforementioned edge of the first portion 10, preferably along its entire linear extension. Otherwise, the second portion 11 can extend starting from the aforementioned edge of the first portion 10 for a portion of its linear extension. Otherwise still, the second portion 11 could define a window, which, with the lid 8 in the closed configuration, allows direct access to the front face 9' of the tank 9.

In more detail, said tank 9 comprises at least one tap 12. Advantageously, said tap 12 is directly accessible from the outside with said lid 8 in said closed configuration. In greater detail, the tap 12 is mechanically connected to the tank 9 at its front face 9'. Advantageously, the lid 8 is configured so that, in its closed configuration, the lid itself only partially obstructs the second opening 7" for accessing the second compartment 6 in which the tank 9 is housed and so that the tap 12 of the tank itself is thus accessible from the outside even when the lid 8 is in the closed configuration.

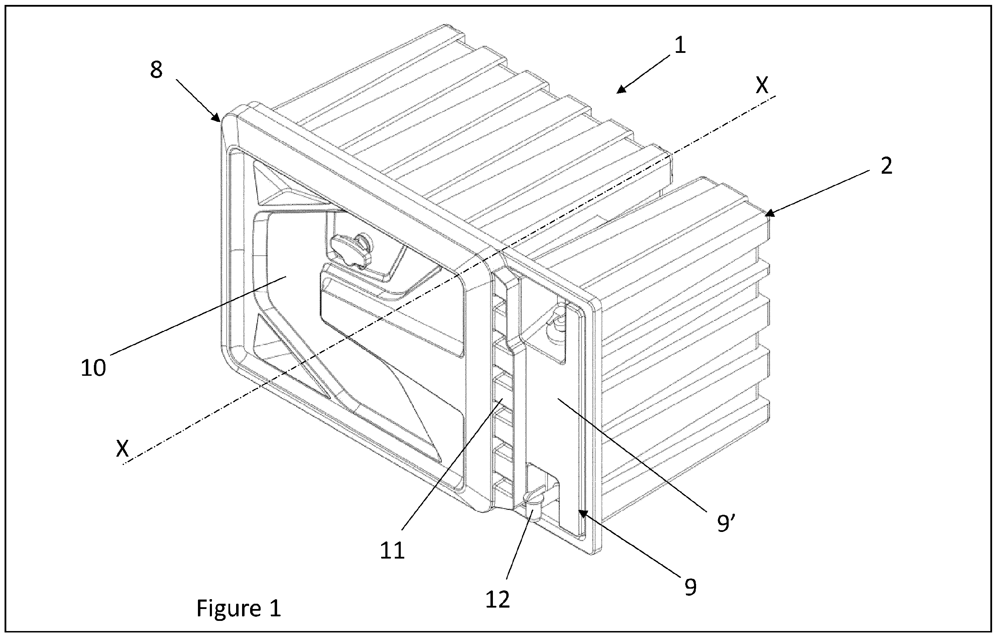

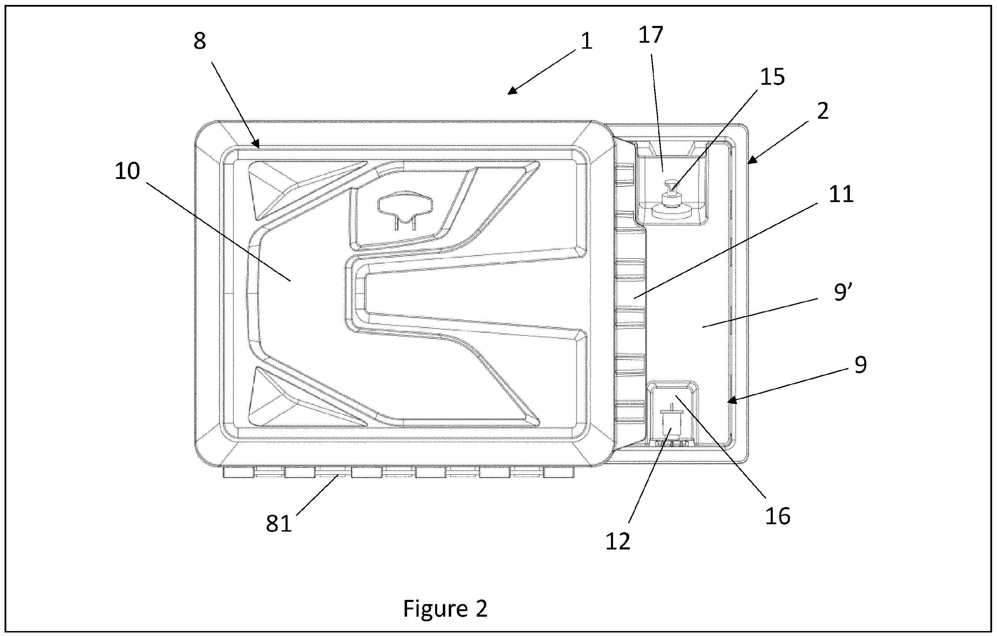

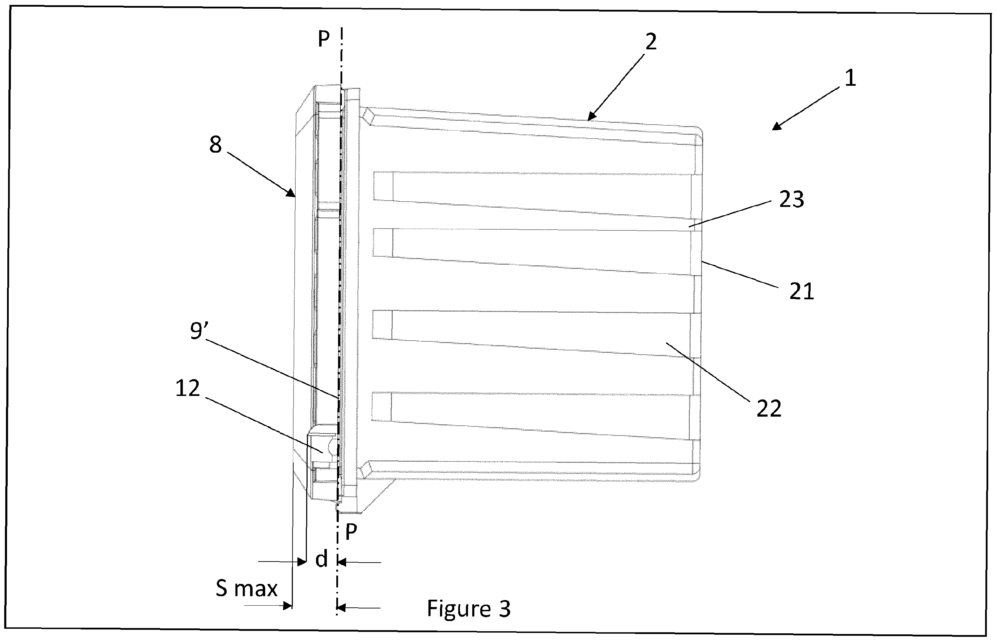

In this way, an operator can easily access said tank 9, and in particular the tap 12, without having to move the lid 8 from the closed configuration to the open configuration. In this way, the use of said tank 9, and in particular of the cock 12, is very simple and rapid. Preferably, the tap 12 is mechanically connected to the tank 9 and is positioned close to the lower edge of the front face 9' of the tank 9 (see Figures 1-4). Preferably, when the device 1 is installed/assembled on the vehicle, the tap 12 is located at a lower geodetic level than the second tap 15. Preferably, said tap 12 is positioned in a lowered position of the tank 9 (cf. figures 1-4) in such a way as to be able to dispense the fluid and/or gel contained therein by effect of the force of gravity, for example without the aid of a pump.

Preferably, according to a preferred embodiment such as the one illustrated in the attached figures, the tank 9 can comprise a second tap 15, for example a dispenser and/or a dispenser, called in the technical jargon of the sector with the term "dispenser" and/or or "soap dish". Preferably, said dispenser, in use, is arranged in an elevated position with respect to the position of the tap 12 and is configured to dispense and/or dose a fluid, for example a gel, such as in particular a soap for sanitizing the hands of a operator.

For this purpose, the tank 9 can preferably internally define two distinct chambers, a first chamber intended to contain a first fluid or gel, placed in fluid connection with the tap 12, and a second chamber intended to contain a second fluid or gel, placed in fluid connection with the second tap 15. For example, the first fluid may be water (or a mixture of water and soap) and the second fluid or gel may be a hand washing or sanitizing gel or the like.

Advantageously, the second tap 15 is also directly accessible from outside the device 1 with the lid 8 in the closed configuration.

Preferably, the second cock 15 is removable, i.e. it can be extracted from the tank 9. Even more preferably, the second chamber which carries the second tank 12 mounted is removable from the first chamber of the tank 9. For example, the second chamber can be made by a bottle or the like (for example in plastic material) housed in the tank 9. Conveniently, the second portion 11 of the lid 8 frees a portion of the front face 9' of the tank 9 sufficient to allow direct access to the tap 12 and preferably also to the second tap 15.

In more detail, said at least one tap 12 protrudes from said front face 9' of said tank 9 for a linear distance less than or equal to a maximum thickness of said second portion 11 of said lid 8.

In more detail, the tap 12 (and preferably also the second tap 15) protrudes from the plane P defined by the access opening 7 for a linear distance d less than or equal to the maximum thickness Smax of the lid 8. In particular, the distance linear d of the tap 12 and the maximum thickness Smax of the lid 8 are measured along a transverse direction with respect to the plane P with the lid 8 in the closed configuration.

Advantageously, in this way there is no risk that said tap 12 hits against surrounding objects and bodies since it does not protrude beyond said cover 8, thus avoiding possible breakages which could compromise the functionality of the device 1.

Preferably, the tank 9 is provided, in correspondence with its front face 9', with at least one first depression 16 in which the tank 12 is arranged. Likewise, preferably, the tank 9 is provided, in correspondence with its front face 9 ', of at least a second depression 17 in which the second tank 15 is arranged. Preferably, when the device 1 is installed/assembled on the vehicle, the second depression 17 is located at a higher geodetic level than the first depression 16.

Advantageously, said tank 9 can be mechanically coupled to said body 2 exclusively by shape coupling. Preferably, the second compartment 6 is configured in terms of shape and dimensions so as to receive the tank 9 entirely inside it and also so as to prevent movement (if not at most due to a minimum clearance) along two directions perpendicular to each other and also perpendicular to the extraction/insertion direction of the tank 9 through the access opening 7 of the body 2. Conveniently, this is obtained without mechanical joints and, in particular, without making any cuts on the external surfaces of the tank 9 and on the internal surfaces of the second compartment 6 corresponding shaped sections for mutual mechanical interlocking, thus advantageously simplifying the molding and manufacturing of both the body 2 and the tank 9. Conveniently, the tank 9 is not hooked inside the second compartment 6 and, its holding/locking to the interior of said second compartment, is obtained exclusively or in any case mainly by means of said second portion 11 of the lid 8 which defines a mechanical abutment for a part of the front face 9' of the tank 6.

Advantageously, the device 1 does not include means for blocking the tank 9 in the second compartment 6 outside the mechanical abutment defined by the lid 8 in the closed configuration.

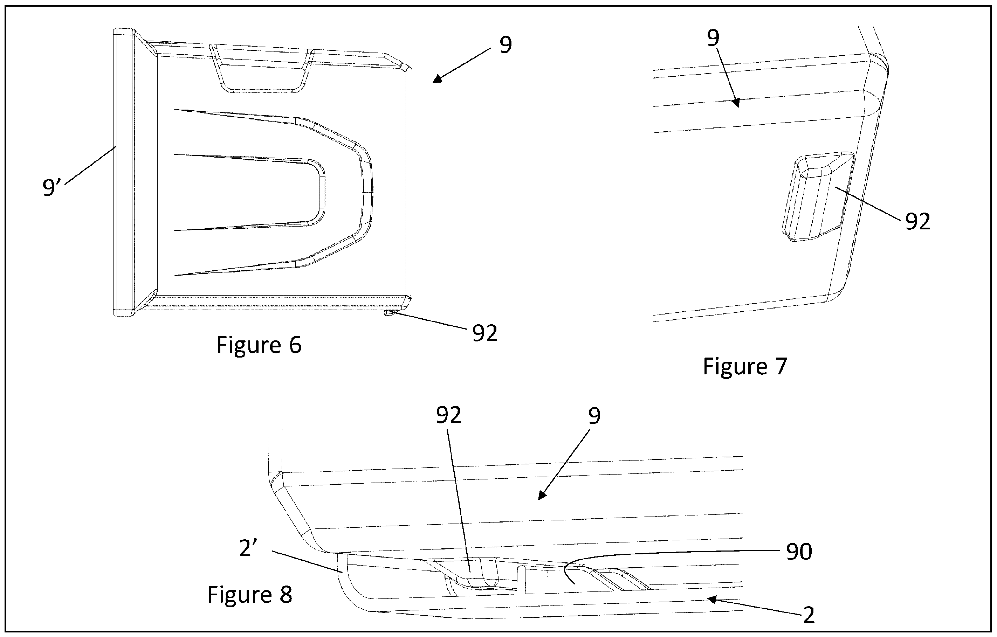

Conveniently, in a possible embodiment (cf. figs. 6 - 8), again in addition to the mechanical stop that the lid 8 defines for the tank 6 inserted in the second compartment, said tank 9 comprises abutment means (defined by a first tooth 92) which cooperate by abutting, in the extraction direction of the tank 9 from the second compartment 6, with abutment means (defined by a second tooth 90) obtained inside the second compartment. Advantageously, this allows the load of the tank 9 to be relieved on the lid 8. In accordance with a further embodiment not shown in the accompanying figures, the body 2 can comprise at least one tooth, protruding from at least one internal wall of the second compartment 6, preferably from the lower wall of the compartment 6, configured to be housed inside a corresponding seat formed on the tank 9. In more detail, the tooth of the body 2 defines an undercut engagement on the tank 9 in order to cooperate with the mechanical abutment of the lid 8 to retain the tank 9 itself in the second compartment 6.

The tooth of the body 2 and the seat of the tank 9 are preferably made by molding during their forming.

In other words, said form coupling is such as to block, with tank 9 inserted in the second compartment 6, all degrees of freedom of said tank 9 except that of rectilinear linear sliding, parallel to axis X, necessary for insertion/disconnection of said tank 9 in compartment 6.

In more detail, this last degree of freedom, ie the insertion/disconnection movement of the tank 9 inside the compartment 6, is prevented by said second portion 11, with said lid 8 in the closed configuration.

From what has been described it is clear that the container device for vehicles, according to the invention, is particularly advantageous because:
- allows you to withdraw the liquid and/or gel from the tank without having to remove the tank from the containment body and, above all, even when the lid is in the closed configuration, and at the same time it is possible to fill or clean the tank by opening the lid and removing the tank itself from its receiving compartment,
- allows you to fill or clean the tank quickly and easily, obviating any need for effort or work on the part of the operator; it is provided with at least one slidingly removable tank, connected to the body of the container device only by shape and size coupling, without any joint or dedicated mechanical fastening;
- it is provided with at least one tank that can be easily removed since there are no means for blocking the tank itself;
- it allows to reduce installation costs and times by at least 50%;
- it has no pipes and/or connection elements between the tank and the tap;
- it is functionally entirely reliable;
- it is simple and/or cheap to make;
- it is economically advantageous;
- it is mechanically resistant;
- it is compact;
- it is aesthetically pleasing;
- it can be made on an industrial level with traditional manufacturing systems and known construction techniques;
- it can be applied directly to commercial vehicles without the need for expensive and complex preparation and/or adaptation operations;
- presents an alternative and/or improved configuration, both in constructive and in functional terms, with respect to conventional known solutions.

The present invention has been illustrated and described in a preferred embodiment thereof, but it is understood that executive variants can be applied to it in practice, without however departing from the scope of protection of the present patent for industrial invention as defined by the claims.

## Claims

1. Container device (1) configured to be mechanically mounted on a vehicle, in particular outside a passenger compartment of said vehicle, comprising:
- at least one containment body (2) internally defining at least one housing volume (3) and with at least one access opening (7) which places said volume (3) in communication with an external environment;
- at least one separator element (4) placed within said housing volume (3) and configured to separate said housing volume (3) into at least one first compartment (5) and at least one second compartment (6);
- at least one closing lid (8) which is mechanically connected to said at least one containing body (2) and which is movable between a closed configuration in which said at least one lid (8) at least partially obstructs said access opening (7) and an open configuration in which it clears said access opening (7);
- at least one tank (9) to contain at least one liquid and/or a gel, said at least one tank (9) is configured to be housed inside said second compartment (6) and is provided with a front face (9');
wherein said tank (9) is removably inserted inside said second compartment (6);
and **characterized in that** the lid (8) is configured in such a way that, in said closed configuration, it locks said tank (9) inside said second compartment (6) only partially obstructing access to the second compartment (6) , so that a part of said front face (9') of the tank (9) is accessible from the outside even when the lid (8) is in the closed configuration.

2. Device according to claim 1, **characterized in that** said at least one lid (8), in said closed configuration, defines a mechanical stop in correspondence with said second compartment (6) to block said tank (9) inside said second compartment (6) with said front face (9') placed in abutment against said lid (8).

3. Container device (1) according to one or more of the preceding claims, **characterized in that** said tank (9) has a size substantially equal to the volume defined by said second compartment (6), so as to be fitted to measure in said second compartment (6).

4. Container device (1) according to one or more of the preceding claims, **characterized in that** said lid (8) comprises:
- a first portion (10), which at least partially obstructs said access opening (7) at said first compartment (5) with said lid (8) in the closed configuration;
- a second portion (11), which at least partially obstructs said access opening (7) in correspondence with said second compartment (6) with said lid (8) in the closed configuration, to define said mechanical stop and lock said tank (9) inside said second compartment (6).

5. Container device (1) according to one or more of the preceding claims, **characterized in that** said separator element (4) divides said access opening (7) into a first opening (7') for said first compartment (5) and a second opening (7") for said second compartment (6); said second portion (11) of said lid (8), with said lid (8) in said closed configuration, only partially obstructs said second opening (7") so as to allow access to said tank (9).

6. Container device (1) according to one or more of the preceding claims, **characterized in that** said tank (9) comprises at least one tap (12) on said front face (9') and **in that** said lid (8), when in said closed configuration does not cover said at least one tap (12) which, therefore, is directly accessible from the outside even when said lid (8) is in said closed configuration.

7. Container device (1) according to one or more of the preceding claims, **characterized in that** said second opening (7") of said second compartment (6) defines a plane (P) and **in that** said tank (9) is provided with said front face (9') extending at least partially along said plane (P) and placed in abutment against said second portion (11) of said lid (8) in said closed configuration.

8. Container device (1) according to one or more of the preceding claims, **characterized in that** said at least one tap (12) protrudes from said front face (9') of said tank (9) for a linear distance less than or equal to a thickness maximum of said second portion (11) of said lid (8).

9. Container device (1) according to one or more of the preceding claims, **characterized in that** said separator element (4) is made in one piece with said body (2).

10. Container device (1) according to one or more of the preceding claims, **characterized in that** said body (2) is made by molding of plastic material.

11. Container device (1) according to one or more of the preceding claims, **characterized in that** said tank (9) is mechanically coupled to said body (2) exclusively by shape coupling.

12. Container device (1) according to one or more of the preceding claims, **characterized in that** said tank (9) is slidably inserted inside said second compartment (6).

13. Container device (1) according to one or more of the preceding claims, **characterized in that** said tank (9) comprises a bottom base which is opposite and facing said front face (9') and **in that**, when said tank (9 ) is completely inserted and housed inside said second compartment (6), the bottom base of said tank (9) comes into contact with the inner surface of a bottom wall (21) of the second compartment (6) of said body (2).

14. Container device (1) according to one or more of the preceding claims, **characterized in that** said second compartment (6) has a flared shape towards a corresponding bottom wall (21) opposite and facing the access opening (7) and **in that** said tank (9) has a flared shape towards its bottom base which is opposite and facing said front face (9').

15. Container device (1) according to one or more of the preceding claims, **characterized in that** said tank (9) comprises abutment means (92) which cooperate by abutting, in the extraction direction of the tank (9) from the second compartment (6), with abutment means obtained inside the second compartment (6).

## Patentansprüche

1. Behältervorrichtung (1), die zur mechanischen Montage an einem Fahrzeug, insbesondere außerhalb eines Fahrgastraums des Fahrzeugs, konfiguriert ist, umfassend:
- mindestens einen Einschlusskörper (2), der im Inneren mindestens ein Gehäusevolumen (3) definiert und über mindestens eine Zugangsöffnung (7) verfügt, die das Volumen (3) mit einer Außenumgebung in Verbindung bringt;
- mindestens ein Trennelement (4), das innerhalb des Gehäusevolumens (3) platziert und so konfiguriert ist, dass es das Gehäusevolumen (3) in mindestens ein erstes Fach (5) und mindestens ein zweites Fach (6) trennt;
- mindestens einen Verschlussdeckel (8), der mechanisch mit dem mindestens einen Aufnahmekörper (2) verbunden ist und zwischen einer geschlossenen Konfiguration, in der der mindestens eine Deckel (8) die Zugangsöffnung (7) zumindest teilweise versperrt, beweglich ist und eine offene Konfiguration, in der es die Zugangsöffnung (7) freigibt;
- mindestens einen Tank (9) zur Aufnahme mindestens einer Flüssigkeit und/oder eines Gels, wobei der mindestens eine Tank (9) so konfiguriert ist, dass er im zweiten Fach (6) untergebracht werden kann, und mit einer Vorderseite (9') versehen ist;
wobei der Tank (9) herausnehmbar in das zweite Fach (6) eingesetzt ist; und **dadurch gekennzeichnet, dass** der Deckel (8) so konfiguriert ist, dass er in der geschlossenen Konfiguration den Tank (9) im zweiten Fach (6) verriegelt und den Zugang zum zweiten Fach (6) nur teilweise versperrt, so dass ein Teil der Vorderseite (9') des Tanks (9) auch bei geschlossenem Deckel (8) von außen zugänglich ist.

2. Vorrichtung nach Anspruch 1, **dadurch gekennzeichnet, dass** der mindestens eine Deckel (8) in der geschlossenen Konfiguration einen mechanischen Anschlag in Übereinstimmung mit dem zweiten Fach (6) definiert, um den Tank (9) innerhalb des zweiten Fachs (6) zu blockieren, wobei die Vorderseite (9') am Deckel (8) anliegt.

3. Behältervorrichtung (1) nach einem oder mehreren der vorhergehenden Ansprüche, **dadurch gekennzeichnet, dass** der Tank (9) eine Größe aufweist, die im Wesentlichen dem durch das zweite Fach (6) definierten Volumen entspricht, sodass er auf Maß auf dem zweiten Fach (6) angepasst werden kann.

4. Behältervorrichtung (1) nach einem oder mehreren der vorhergehenden Ansprüche, **dadurch gekennzeichnet, dass** der Deckel (8) umfasst:
- einen ersten Abschnitt (10), der bei geschlossenem Deckel (8) die Zugangsöffnung (7) am ersten Fach (5) zumindest teilweise versperrt;
- einen zweiten Abschnitt (11), der die Zugangsöffnung (7) in Verbindung mit dem zweiten Fach (6) bei geschlossenem Deckel (8) zumindest teilweise versperrt, um den mechanischen Anschlag zu definieren und den Tank (9) im zweiten Fach (6) zu verriegeln.

5. Behältervorrichtung (1) nach einem oder mehreren der vorhergehenden Ansprüche, **dadurch gekennzeichnet, dass** das Trennelement (4) die Zugangsöffnung (7) in eine erste Öffnung (7') für das erste Fach (5) und in eine zweite Öffnung (7") für das zweite Fach (6) trennt; wobei der zweite Abschnitt (11) des Deckels (8) bei geschlossenem Deckel (8) die zweite Öffnung (7") nur teilweise versperrt, um den Zugang zum Tank (9) zu ermöglichen.

6. Behältervorrichtung (1) nach einem oder mehreren der vorhergehenden Ansprüche, **dadurch gekennzeichnet, dass** der Tank (9) an der Vorderseite (9') mindestens einen Hahn (12) aufweist und dass der Deckel (8) in der geschlossenen Konfiguration den mindestens einen Hahn (12) nicht abdeckt, der daher auch in der geschlossenen Konfiguration des Deckels (8) von außen direkt zugänglich ist.

7. Behältervorrichtung (1) nach einem oder mehreren der vorhergehenden Ansprüche, **dadurch gekennzeichnet, dass** die zweite Öffnung (7") des zweiten Fachs (6) eine Ebene (P) definiert und dass der Tank (9) mit einer Vorderseite (9') versehen ist, die sich zumindest teilweise entlang der Ebene (P) erstreckt und in der geschlossenen Konfiguration an dem zweiten Abschnitt (11) des Deckels (8) anliegt.

8. Behältervorrichtung (1) nach einem oder mehreren der vorhergehenden Ansprüche, **dadurch gekennzeichnet, dass** der mindestens eine Hahn (12) über eine lineare Entfernung von der Vorderseite (9') des Tanks (9) absteht, die kleiner oder gleich der maximalen Dicke des zweiten Abschnitts (11) des Deckels (8) ist.

9. Behältervorrichtung (1) nach einem oder mehreren der vorhergehenden Ansprüche, **dadurch gekennzeichnet, dass** das Trennelement (4) einstückig mit dem Körper (2) hergestellt ist.

10. Behältervorrichtung (1) nach einem oder mehreren der vorhergehenden Ansprüche, **dadurch gekennzeichnet, dass** der Körper (2) durch Formen aus Kunststoff hergestellt ist.

11. Behältervorrichtung (1) nach einem oder mehreren der vorhergehenden Ansprüche, **dadurch gekennzeichnet, dass** der Tank (9) ausschließlich durch Formkopplung mechanisch mit dem Körper (2) angekoppelt ist.

12. Behältervorrichtung (1) nach einem oder mehreren der vorhergehenden Ansprüche, **dadurch gekennzeichnet, dass** der Tank (9) verschiebbar in das zweite Fach (6) eingesetzt ist.

13. Behältervorrichtung (1) nach einem oder mehreren der vorhergehenden Ansprüche, **dadurch gekennzeichnet, dass** der Tank (9) eine Bodenbasis aufweist, die der Vorderseite (9') gegenüberliegt und zu dieser weist, und dass, wenn der Tank (9) vollständig in das zweite Fach (6) eingesetzt und darin untergebracht ist, kommt die Bodenbasis des Tanks (9) mit der Innenfläche einer Bodenwand (21) des zweiten Fachs (6) des Körpers (2) in Kontakt.

14. Behältervorrichtung (1) nach einem oder mehreren der vorhergehenden Ansprüche, **dadurch gekennzeichnet, dass** das zweite Fach (6) eine konisch zu einer entsprechenden Bodenwand (21) gegenüberliegende und dieser zugewandte Zugangsöffnung (7) mit einer konisch zulaufenden Form aufweist und dass der Tank (9) konisch zu seiner Bodenbasis hin konisch zuläuft, die der Vorderseite (9') gegenüberliegt und dieser zugewandt ist.

15. Behältervorrichtung (1) nach einem oder mehreren der vorhergehenden Ansprüche, **dadurch gekennzeichnet, dass** der Tank (9) Anschlagmittel (92) aufweist, die in Entnahmerichtung des Tanks (9) aus dem zweiten Fach (6) durch Anschlagen an Anschlagmittel im Inneren des zweiten Fachs (6) zusammenwirken.

## Revendications

1. Dispositif de conteneur (1) configuré pour être monté mécaniquement sur un véhicule, notamment à l'extérieur d'un habitacle dudit véhicule, comprenant:
- au moins un corps de confinement (2) délimitant intérieurement au moins un volume de logement (3) et présentant au moins une ouverture d'accès (7) qui met ledit volume (3) en communication avec un environnement extérieur;
- au moins un élément séparateur (4) placé à l'intérieur dudit volume de logement (3) et configuré pour séparer ledit volume de logement (3) en au moins un premier compartiment (5) et au moins un deuxième compartiment (6);
- au moins un couvercle de fermeture (8) qui est relié mécaniquement audit au moins un corps de confinement (2) et qui est mobile entre une configuration fermée dans laquelle ledit au moins un couvercle (8) obstrue au moins partiellement ladite ouverture d'accès (7) et une configuration ouverte dans laquelle il dégage ladite ouverture d'accès (7);
- au moins un réservoir (9) pour contenir au moins un liquide et/ou un gel, ledit au moins un réservoir (9) étant configuré pour être logé à l'intérieur dudit deuxième compartiment (6) et étant pourvu d'une face avant (9');
dans lequel ledit réservoir (9) est inséré de manière amovible à l'intérieur dudit deuxième compartiment (6); et **caractérisé en ce que** le couvercle (8) est configuré de telle manière que, dans ladite configuration fermée, il verrouille ledit réservoir (9) à l'intérieur dudit deuxième compartiment (6) en obstruant seulement partiellement l'accès au deuxième compartiment (6), de sorte qu'une partie de ladite face avant (9') du réservoir (9) est accessible depuis l'extérieur même lorsque le couvercle (8) est dans la configuration fermée.

2. Dispositif selon la revendication 1, **caractérisé en ce que** ledit au moins un couvercle (8), dans ladite configuration fermée, définit une butée mécanique en correspondance avec ledit deuxième compartiment (6) pour bloquer ledit réservoir (9) à l'intérieur dudit deuxième compartiment (6) avec ladite face avant (9') placée en butée contre ledit couvercle (8).

3. Dispositif conteneur (1) selon une ou plusieurs des revendications précédentes, **caractérisé en ce que** ledit réservoir (9) a une taille sensiblement égale au volume défini par ledit deuxième compartiment (6), de manière à être adapté sur mesure dans ledit deuxième compartiment (6).

4. Dispositif conteneur (1) selon une ou plusieurs des revendications précédentes, **caractérisé en ce que** ledit couvercle (8) comprend:
- une première partie (10), qui obstrue au moins partiellement ladite ouverture d'accès (7) au niveau dudit premier compartiment (5) avec ledit couvercle (8) dans la configuration fermée;
- une deuxième partie (11), qui obstrue au moins partiellement ladite ouverture d'accès (7) en correspondance avec ledit deuxième compartiment (6) avec ledit couvercle (8) dans la configuration fermée, pour définir ladite butée mécanique et verrouiller ledit réservoir (9) à l'intérieur dudit deuxième compartiment (6).

5. Dispositif conteneur (1) selon une ou plusieurs des revendications précédentes, **caractérisé en ce que** ledit élément séparateur (4) divise ladite ouverture d'accès (7) en une première ouverture (7') pour ledit premier compartiment (5) et une deuxième ouverture (7") pour ledit deuxième compartiment (6); ladite deuxième partie (11) dudit couvercle (8), avec ledit couvercle (8) dans ladite configuration fermée, obstrue seulement partiellement ladite deuxième ouverture (7") de manière à permettre l'accès audit réservoir (9).

6. Dispositif conteneur (1) selon une ou plusieurs des revendications précédentes, **caractérisé en ce que** ledit réservoir (9) comprend au moins un robinet (12) sur ladite face avant (9') et **en ce que** ledit couvercle (8), lorsqu'il est dans ladite configuration fermée, ne recouvre pas ledit au moins un robinet (12) qui, par conséquent, est directement accessible depuis l'extérieur même lorsque ledit couvercle (8) est dans ladite configuration fermée.

7. Dispositif conteneur (1) selon une ou plusieurs des revendications précédentes, **caractérisé en ce que** ladite deuxième ouverture (7") dudit deuxième compartiment (6) définit un plan (P) et **en ce que** ledit réservoir (9) est pourvu de ladite face avant (9') s'étendant au moins partiellement le long dudit plan (P) et placée en butée contre ladite deuxième partie (11) dudit couvercle (8) dans ladite configuration fermée.

8. Dispositif conteneur (1) selon une ou plusieurs des revendications précédentes, **caractérisé en ce que** ledit au moins un robinet (12) fait saillie de ladite face avant (9') dudit réservoir (9) sur une distance linéaire inférieure ou égale à une épaisseur maximale de ladite deuxième partie (11) dudit couvercle (8).

9. Dispositif conteneur (1) selon une ou plusieurs des revendications précédentes, **caractérisé en ce que** ledit élément séparateur (4) est réalisé d'une seule pièce avec ledit corps (2).

10. Dispositif conteneur (1) selon une ou plusieurs des revendications précédentes, **caractérisé en ce que** ledit corps (2) est réalisé par moulage de matière plastique.

11. Dispositif conteneur (1) selon une ou plusieurs des revendications précédentes, **caractérisé en ce que** ledit réservoir (9) est couplé mécaniquement audit corps (2) exclusivement par couplage de forme.

12. Dispositif conteneur (1) selon une ou plusieurs des revendications précédentes, **caractérisé en ce que** ledit réservoir (9) est inséré de manière coulissante à l'intérieur dudit deuxième compartiment (6).

13. Dispositif conteneur (1) selon une ou plusieurs des revendications précédentes, **caractérisé en ce que** ledit réservoir (9) comprend une base inférieure qui est opposée et tournée vers ladite face avant (9') et **en ce que**, lorsque ledit réservoir (9) est complètement inséré et logé à l'intérieur dudit deuxième compartiment (6), la base inférieure dudit réservoir (9) vient en contact avec la surface intérieure d'une paroi inférieure (21) du deuxième compartiment (6) dudit corps (2).

14. Dispositif conteneur (1) selon une ou plusieurs des revendications précédentes, **caractérisé en ce que** ledit deuxième compartiment (6) a une forme évasée vers une paroi inférieure correspondante (21) opposée et tournée vers l'ouverture d'accès (7) et **en ce que** ledit réservoir (9) a une forme évasée vers sa base inférieure qui est opposée et tournée vers ladite face avant (9').

15. Dispositif conteneur (1) selon une ou plusieurs des revendications précédentes, **caractérisé en ce que** ledit réservoir (9) comprend des moyens de butée (92) qui coopèrent par butée, dans le sens d'extraction du réservoir (9) du deuxième compartiment (6), avec des moyens de butée obtenus à l'intérieur du deuxième compartiment (6).
